Europäisches Patentamt

**European Patent Office**

**Office européen des brevets**

(11) Veröffentlichungsnummer: **0 028 681**
**A1**

(12) **EUROPÄISCHE PATENTANMELDUNG**

(21) Anmeldenummer: **80104921.4**

(22) Anmeldetag: **19.08.80**

(51) Int. Cl.³: **F 15 B 20/00**
**F 16 P 3/00, E 01 C 19/26**

(30) Priorität: **13.11.79 DE 2945716**

(43) Veröffentlichungstag der Anmeldung:
**20.05.81 Patentblatt 81/20**

(84) Benannte Vertragsstaaten:
**AT CH DE FR GB LI SE**

(71) Anmelder: **LOSENHAUSEN Maschinenbau AG**
**Schlüterstrasse 13-19**
**D-4000 Düsseldorf(DE)**

(72) Erfinder: **Braun, Günther**
**Klaus Groth Strasse 18**
**D-2370 Rendsburg-Büdelsdorf(DE)**

(74) Vertreter: **Weisse, Jürgen, Dipl.-Phys. et al,**
**Bökenbusch 41 Postfach 11 03 86**
**D-5620 Velbert 11-Langenberg(DE)**

(54) **Sicherheitseinrichtung an selbstfahrenden Arbeitsgeräten.**

(57) Bei selbstfahrenden Arbeitsgeräten für Mitgängerbetrieb mit hydrostatischem Fahrantrieb ist eine Sicherheitsvorrichtung vorgesehen, welche mittels eines Federkraftspeichers 50 die den Fahrantrieb speisende Verstellpumpe 18 auf Nullförderung zurückstellt, wenn der Maschinenführer den Führungshandgriff 44 losläßt. Der Federkraftspeicher 50 wird durch einen von Hilfsenergie gespeisten Stellmotor 54, 56 in die kraftspeichernde Stellung bewegt und in dieser gehalten. Die Zufuhr der Hilfsenergie wird von einem am Führungshandgriff 44 vorgesehenen und auf das Berühren desselben durch den Maschinenführer ansprechenden Signalgeber 88 gesteuert.

./...

## Sicherheitseinrichtung an selbstfahrenden Arbeis-geräten

Die Erfindung betrifft eine Sicherheitseinrichtung an selbstfahrenden Arbeitsgeräten für Mitgängerbetrieb, bei denen der Fahrantrieb hydrostatisch mittels einer von einerKraftmaschine angetriebenen Verstellpumpe und wenigstens eines von der Verstellpumpe gespeisten Hydraulikmotors erfolgt, enthaltend: einen Signalgeber, der auf das Berühren eines Funktionsteils des Arbeitsgeräts durch den Maschinenführer anspricht und ein Berührungssignal liefert, und einen Federkraftspeicher, der durch das Berührungssignal des Signalgebers in kraftspeichernder Stellung gehalten wird und durch dessen Federkraft die Verstellpumpe bei Wegfall des Berührungssignals auf Nullförderung verstellbar ist.

Solche Sicherheitseinrichtungen haben den Zweck, den Fahrantrieb des Arbeitsgeräts stillzusetzen, sobald der Maschinenführer einen bestimmten Funktionsteil des Arbeitsgeräts, beispielsweise einen Führungshandgriff, losläßt. Dadurch kann das Arbeitsgerät nicht ohne Führung unkontrolliert weiterfahren. Es wird auch verhindert, daß das Arbeitsgerät etwa einen gestürzten Maschinenführer im Weiterfahren überrollt.

Das Arbeitsgerät kann beispielsweise eine Duplex-Straßenwalze sein.

Es sind Sicherheitseinrichtungen für selbstfahrende Arbeitsgeräte der vorliegenden Art bekannt, bei denen mit dem Führungshandgriff ein Griffbügel verbunden ist, der gegen eine Federkraft gegen den Führungshandgriff gezogen werden kann. Beim Loslassen des Führungshandgriffs und des Griffbügels drückt die Federkraft den Griffbügel vom Führungshandgriff weg. Diese Bewegung wird auf das Stellglied der Verstellpumpe übertragen und bewirkt dessen Rückstellung auf Nullfördermenge.

Im Gefahrenfall muß die Verstellpumpe sehr schnell auf Nullfördermenge zurückgestellt werden. Diese schnelle Verstellung bedingt eine relativ große Reaktionskraft, die größer ist als die normalen Betätigungskräfte für die Verstellung der Verstellpumpe. Entsprechend groß muß auch die Rückstellkraft des Griffbügels gewählt werden, die beim Betrieb des Arbeitsgeräts ständig vom Maschinenführer aufgebracht werden muß. Das ist nachteilig und ermüdend und birgt die Gefahr in sich, daß der Maschinenführer sich durch Festbinden des Griffbügels entlastet und damit die Sicherheitseinrichtung außer Funktion setzt.

Es ist daher bekannt, die Rückstellung der Verstellpumpen auf Nullförderung im Gefahrenfall durch einen Federkraftspeicher zu bewirken, der von einem Signalgeber im Gefahrenfall ausgelöst wird, der auf das Berühren des Führungsbügels o. dgl. durch den Maschinenführer anspricht. Bei einer solchen Sicherheitseinrichtung braucht der Maschinenführer nicht ständig eine Kraft aufzubringen, welche zum Rückstellen der Verstellpumpe erforderlich ist. Der Kraftspeicher wird lediglich einmal gespannt und von dem Signalgeber beim Loslassen des Führungshandgriffs lediglich ausgelöst. Eine solche Auslösung des Federkraftspeichers erfolgt jedoch auch dann, wenn der Führungshandgriff oder Führungsbügel ohne irgendeine besondere Gefahrensituation vom Maschinenführer einmal kurzzeitig losgelassen wird. Es hat sich gezeigt, daß diese unbeabsichtigte Auslösung des Federkraftspeichers und das Erfordernis, diesen Federkraftspeicher anschließend wieder neu zu spannen, wenn die Fahrt fortgesetzt werden soll, vom Benutzer als störend empfunden wird.

Der Erfindung liegt die Aufgabe zugrunde, bei einer Sicherheitseinrichtung der eingangs definierten Art den Maschinenführer sowohl von der Notwendigkeit zu entlasten, ständig die zum Rückstellen der Verstellpumpe auf Nullfördermenge erforderliche Kraft aufzubringen, als auch von der Notwendigkeit, den Federkraftspeicher nach jedem vorübergehenden Loslassen des Führungshandgriffs o. dgl. neu spannen zu müssen.

Erfindungsgemäß wird diese Aufgabe gelöst, daß

(a)     zum Bewegen des Federkraftspeichers in die kraftspeichernde Stellung und zum Halten in dieser Stellung ein von einer Hilfsenergie gespeister Stellmotor vorgesehen ist und

(b)     die Zufuhr von Hilfsenergie zu dem Stellmotor von dem Signalgeber gesteuert ist.

Auf diese Weise wird der Federkraftspeicher durch den von einer Hilfsenergie gespeisten Stellmotor in die kraftspeichernde Stellung gebracht und in dieser Stellung gehalten. Der Signalgeber schaltet beim Loslassen des Funktionsteils, z.B. Führungshandgriffs, die Hilfsenergie ab, so daß dann der Federkraftspeicher die Verstellpumpe auf Nullförderung zurückstellt. Wird der Funktionsteil wieder angefaßt, so daß der Signalgeber ein Berührungssignal liefert, bewegt der Stellmotor den Federkraftspeicher wieder in die kraftspeichernde Stellung.

Es ist in der Regel erforderlich, daß nach dem Ansprechen der Sicherheitseinrichtung ein Anfahren des Arbeitsgeräts erst wieder möglich ist, wenn vorher ein Geschwindigkeitwählglied in die Nullstellung zurückgestellt worden ist. Es soll auf diese Weise verhindert werden, daß das Arbeitsgerät schon wieder anfährt, wenn beispielsweise ein gestürzter Maschinenführer versucht, sich an dem Führungshandgriff wieder hochzuziehen.

Es ist auch häufig wünschenswert, das Arbeitsgerät auch durch Betätigung des Geschwindigkeitswählgliedes, also z.B. eines Geschwindigkeitshebels, allein mit einer Hand zu bewegen,ohne daß gleichzeitig der Führungshandgriff angefaßt zu werden braucht.

Dies kann dadurch erreicht werden, daß

(a)   ein Stellglied der Verstellpumpe, welches die Fördermenge der Verstellpumpe bestimmt, mit einem Geschwindigkeitswählglied im formschlüssiger Stellverbindung steht, und

(b)   der Federkraftspeicher in seiner kraftspeichernden Stellung eine freie Einstellung des Stellglieds durch das Geschwindigkeitswählglied zuläßt und bei seiner Bewegung aus der kraftspeichernden Stellung kraftschlüssig an dem Stellglied angreift.

Bei einer solchen Ausbildung wird im Gefahrenfall das Stellglied von dem Kraftspeicher kraftschlüssig in die der Nullfördermenge entsprechende Stellung gedrückt. Mit dem Stellglied der Verstellpumpe ist das Geschwindigkeitswählglied über eine formschlüssige Stellverbindung verbunden. Es wird daher auch das Geschwindigkeitswählglied mechanisch in die der Nullfördermenge entsprechende Stellung gedrückt. In dieser Stellung verbleibt es auch, wenn der Federkraftspeicher nach erneutem Anfassen des Führungshandgriffs o. dgl. wieder in seine kraftspeichernde Stellung zurückgeht und das Stellglied der Verstellpumpe freigibt. Das Arbeitsgerät fährt erst wieder an, wenn durch Betätigung des Geschwindigkeitswählgliedes vom Maschinenführer bewußt eine Fahrgeschwindigkeit und Fahrtrichtung vorgegeben wird.

Es ist andererseits aber möglich, ohne Berührung des Führungshandgriffs o. dgl. durch Betätigung des Geschwindigkeitswählgliedes allein unter Überwindung der Federkraft des Federkraftspeichers das Arbeitsgerät in der gewünschten Richtung in Bewegung zu setzen.

Weitere Ausgestaltungen der Erfindung sind Gegenstand der Unteransprüche 3 bis 8.

Ein Ausführungsbeispiel der Erfindung ist nachstehend unter Bezugnahme auf die zugehörige Zeichnung näher erläutert, die schematisch eine Sicherheitseinrichtung der vorliegenden Art zeigt.

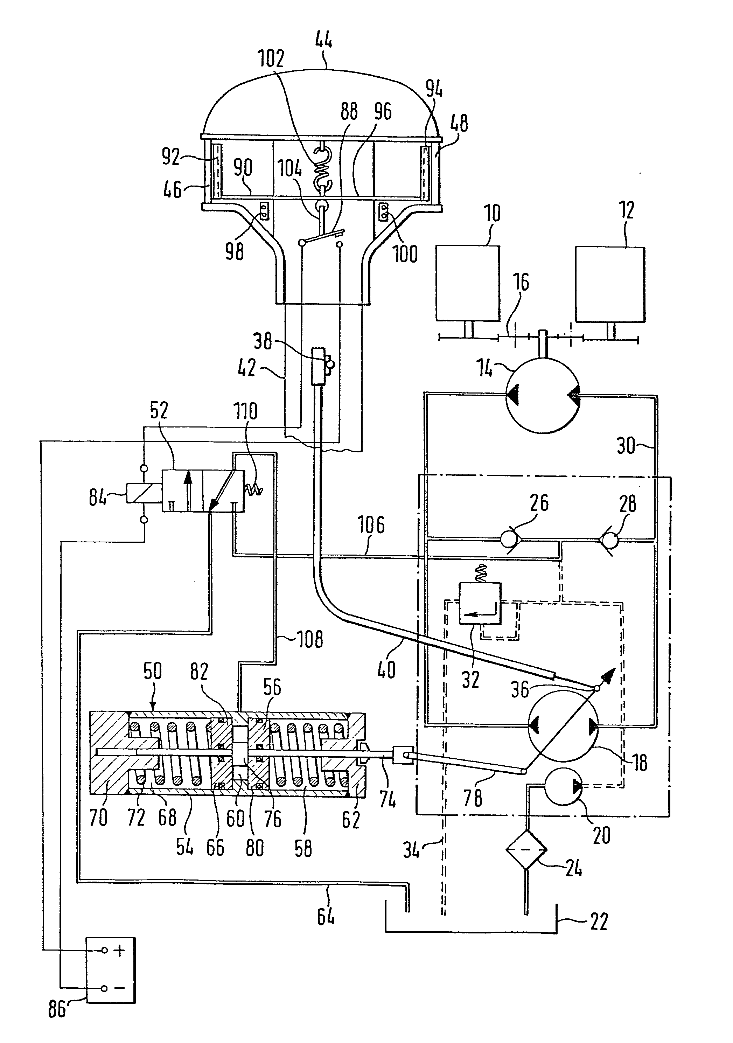

In der Figur sind mit 10 und 12 zwei schematisch dargestellte Walzentrommeln einer Duplex-Straßenwalze bezeichnet, die von einem Hydraulikmotor 14 über ein Zahnradgetriebe 16 angetrieben werden. Der Hydraulikmotor 14 wird in üblicher Weise von einer Verstell- pumpe 18, beispielsweise einer Axialkolbenpumpe, gespeist. Die Verstellpumpe 18 wird zusammen mit einer Speisepumpe 20 von einer (nicht dargestellten) Kraftmaschine angetrieben. Die Speisepumpe 20 saugt Öl aus einem Behälter 22 über ein Filter 24 an und fördert dieses Öl über Rückschlagventile 26, 28 in den Hydraulikkreis 30, der die Anschlüsse der Verstellpumpe 18 mit den Anschlüssen des Hydraulikmotors 14 verbindet. Auf diese Weise wird dafür gesorgt, daß der Hydraulikkreis 30 mit der Verstellpumpe 18 und dem Hydraulikmotor 14 ständig mit Öl gefüllt ist und Leckverluste ersetzt werden. Das Öl, welches von dem Hydraulikkreis 30 oder sonstigen Bauteilen nicht aufgenommen wird, fließt über ein Druckbegrenzerventil 32 und eine Leitung 34 zum Behälter 22 zurück.

Die Fördermenge der Verstellpumpe 18 ist mittels eines Stellgliedes 36 in üblicher Weise verstellbar. Es kann auch die Förderrichtung umgekehrt werden, wodurch die Geschwindigkeit und die Fahrtrichtung der Straßenwalze veränderbar ist. Die Verstellung der Verstellpumpe erfolgt durch den Maschinenführer mittels eines Geschwindigkeitswählhebels 38, dessen Bewegung über einen Bowdenzug 40 formschlüssig auf das Stellglied 36 der Verstellpumpe 18 übertragen wird. Das bedeutet, daß jeder Stellung des Geschwindigkeitswählhebels 38 eine bestimmte Stellung des Stellgliedes 36 und damit eine bestimmte Fördermenge der Verstellpumpe 18 zugeordnet ist und umgekehrt jeder Stellung des Stellgliedes 36 eine bestimmte Stellung des Geschwindigkeitswählhebels 38 zugeordnet werden kann.

Die Straßenwalze wird mittels einer Führungsdeichsel geführt, die in der Figur schematisch dargestellt und mit 42 bezeichnet ist. Die Führungsdeichsel trägt einen Führungshandgriff oder Führungsbügel 44 mit zwei zueinander parallelen, als Griffteile dienenden Schenkeln 46 und 48.

Es muß dafür gesorgt werden, daß die Verstellpumpe 18 auf Nullfördermengen zurückgestellt wird, wenn der Maschinenführer den Führungshandgriff 44 losläßt.

Zu diesem Zweck ist ein Signalgeber vorgesehen, der auf das Berühren des Führungshandgriffs 44 des Arbeitsgeräts durch den Maschinenführer anspricht und ein Berührungssignal liefert. Dieser Signalgeber wird unten näher beschrieben. Es ist weiterhin ein Federkraftspeicher 50 vorgesehen, durch dessen Federkraft die Verstellpumpe 18 bei Wegfall des Berührungssignals auf Nullfördermenge verstellbar ist. Zum Bewegen des Federkraftspeichers 50 in die kraftspeichernde Stellung und zum Halten in dieser Stellung ist ein von einer Hilfsenergie gespeister Stellmotor vorgesehen, wobei die Hilfsenergie von dem durch die Speisepumpe 20 geförderten Druckmittel geliefert wird. Die Zufuhr dieser Hilfsenergie zu dem Stellmotor wird über ein Ventil 52 von dem Signalgeber gesteuert. Das Stellglied 36 der Verstellpumpe 18, welches die Fördermenge der Verstellpumpe bestimmt, steht, wie gesagt, mit einem Geschwindigkeitswählglied, nämlich dem Geschwindigkeitswählhebel 38, in formschlüssiger Stellverbindung. Der Federkraftspeicher 50 ist so ausgebildet, daß er in seiner kraftspeichernden Stellung eine freie Einstellung des Stellgliedes 36 durch den Geschwindigkeitswählhebel 38 zuläßt und bei seiner Bewegung aus der kraftspeichernden Stellung kraftschlüssig an dem Stellglied 36 angreift.

Im einzelnen ist der Stellmotor ein in einem Zylinder 54 zwischen einer kraftspeichernden ersten Stellung und einer zweiten Stellung beweglicher Stellkolben 56, der den Zylinder 54 in eine erste und eine zweite Zylinderkammer 58 bzw. 60 unterteilt. Eine Feder des Federkrafspeichers 50 ist in der ersten Zylinderkammer 58 zwischen dem Stellkolben 56 und der Stirnwand 62 des Zylinders 50 angeordnet. Die zweite Zylinderkammer 60 ist über das Ventil 52 entweder mit einem Auslaß 64 oder mit der Speisepumpe 20 verbunden, welche das die Hilfsenergie liefernde Druckmittel fördert. Das Ventil 52 ist, wie gesagt, durch den Signalgeber gesteuert. Der Stellkolben 56 ist bei seiner Bewegung aus der ersten in die (in der Figur dargestellte) zweite Stellung kraftschlüssig mit dem Stellglied 36 der Verstellpumpe 18 zum Rückstellen derselben auf Nullförderung kuppelbar.

Bei der dargestellten bevorzugten Ausführungsform sind in dem an beiden Enden geschlossenen Zylinder 54 zwei Stellkolben geführt, nämlich außer dem Stellkolben 56 noch ein Stellkolben 66, wobei zwischen dem einen Ende des Zylinders 54 und dem dazu benachbarten ersten Stellkolben 56 die erste Zylinderkammer 58, zwischen den Stellkolben 56 und 66 die zweite Zylinderkammer 60 und zwischen dem anderen Ende des Zylinders 54 und dem diesem benachbarten zweiten Stellkolben 66 eine dritte Zylinderkammer 68 gebildet ist. In der dritten Zylinderkammer 68 ist zwischen der Stirnwand 70 des Zylinders 54 und dem zweiten Stellkolben 66 eine zweite Feder 72 angeordnet. In den Stirnwänden 62 und 70 des Zylinders 54 und den Stellkolben 56, 66 ist eine Schubstange 74 axial verschiebbar geführt, welche zwischen den Stellkolben 56 und 66 einen Mitnehmer 76 aufweist und auf einer Seite durch die Stirnwand 62 hindurch aus dem Zylinder 54 herausgeführt ist. Die Schubstange 74 ist über einen Lenker 78 mit dem Stellglied 36 der Verstellpumpe 18 gekoppelt. An der Innenwandung des Zylinders 54 sind Anschläge 80, 82 vorgesehen, welche die Einwärtsbewegung der Stellkolben 56 und 66 begrenzen. Der Mitnehmer 76 wird bei Anlage der Stellkolben 56, 66 an den Anschlägen 80, 82 formschlüssig zwischen den Stellkolben 56, 66 in einer Stellung gehalten, welche der Nullfördermenge der Verstellpumpe 18 entspricht.

Das Ventil 52 ist ein als Magnetventil ausgebildetes 3/2-Wegeventil, welches die zweite Zylinderkammer 60 im erregten Zustand mit der Speisepumpe 20 und im nicht-erregten Zustand mit dem Auslaß 64 verbindet. Die Erregerwicklung 84 liegt in einem von einer Batterie 86 gespeisten Stromkreis mit einem bei Berühren des Führungshandgriffs 44 geschlossenen Schalter 88, der einen Teil des Signalgebers bildet.

In dem Führungshandgriff ist ein U-förmiger Klinkenteil 90 angebracht, dessen Schenkel 92, 94 im Abstand innerhalb der beiden Schenkel 46, 48 des Führungshandgriffs 44 und parallel zu diesen verlaufen. Der Mittelteil 96 des Klinkenteils 90 ist mittels zweier paralleler Lenker 98, 100 an dem Führungshandgriff 44 angelenkt. Der Klinkenteil 90 wird durch eine Feder 102 unter Zugbeanspruchung der Lenker 98, 100 gegen den Führungshandgriff 44 in einer zu den Schenkeln 92, 94 parallelen Richtung vorgespannt. Der Schalter 88 liegt mit einem Fühlerarm 104 an dem Mittelteil 96 des U-förmigen Klinkenteils 90 an.

Die beschriebene Anordnung arbeitet wie folgt:

Bei normalem Betrieb wird das Arbeitsgerät mittels des Führungshandgriffs 44 geführt, wobei der Maschinenführer an einem der Griffteile 46 und 48 angreift und dabei den zugehörigen Schenkel 92 oder 94 des Klinkenteils 90 gegen den Griffteil 46 oder 48 zieht. Dabei bewegt sich der Mittelteil 96 des Klinkenteils 90 infolge der Parallellenkerführung 98, 100 etwas nach unten. Hierdurch wird über den Fühlerhebel 104 der Schalter 88 geschlossen. Das Ventil 52 schaltet aus der dargestellten Stellung in die Stellung um, in welcher es die von der Speisepumpe 20 kommende Leitung 106 mit der Leitung 108 verbindet, die zu der zweiten Zylinderkammer 60 geführt ist. Das Drucköl von der Speisepumpe 20 drückt dabei die Stellkolben 56 und 66 unter Kompression der Federn nach rechts bzw. nach links auseinander. Dadurch wird der Mitnehmer 76 frei beweglich.

Mittels des Geschwindigkeitswählhebels 38 kann die Verstellpumpe 18 auf die gewünschte Fördermenge und -richtung eingestellt und damit eine Fahrtrichtung und Fahrgeschwindigkeit vorgegeben werden.

Läßt der Maschinenführer den Führungshandgriff 44 los, beispielsweise weil er gestürzt ist, so kehrt der Klinkenteil 90 unter dem Einfluß der Feder 102 in die dargestellte Lage zurück. Der Schalter 88 öffnet. Damit geht das Ventil 52 unter dem Einfluß der Feder 110 in die dargestellte Ruhestellung zurück, in welcher es die Leitung 108 und damit die zweite Zylinderkammer 60 mit dem Auslaß 64 verbindet. Das Drucköl kann somit aus der zweiten Zylinderkammer 60 abfließen und die Federn drücken die Stellkolben 56 und 66 in die dargestellte Lage zurück. Hierdurch wird der Mitnehmer 76, der je nach der vorgegebenen Stellung des Stellgliedes 36 sich rechts oder links von der dargestellten Lage befunden hatte, von dem jeweiligen Stellkolben 56 oder 66 kraftschlüssig mitgenommen und in die dargestellte Mittelstellung gedrückt. Über die Schubstange 74 und den Lenker 78 wird dadurch das Stellglied 36 der Verstellpumpe 18 in die Stellung für Nullfördermenge bewegt. Mit dem Stellglied 36 wird über den Bowdenzug 40 aber gleichzeitig der Geschwindigkeitswählhebel 38 in die Nullstellung verschwenkt. In dieser Stellung bleibt der Geschwindigkeitswählhebel 38 zunächst stehen.

Wenn jetzt der gestürzte Maschinenführer versucht, sich an dem Führungshandgriff 44 hochzuziehen und dabei den Schalter 88 wieder schließt, so daß die Stellkolben 56 und 66 auseinandergefahren werden, so bleibt doch das Arbeitsgerät zunächst stehen, da das Stellglied 36 mit dem Geschwindigkeitswählhebel 38 in der Stellung für Nullfördermenge verbleiben. Das Arbeitsgerät kann erst dann wieder weiterfahren, wenn der Maschinenführer den Geschwindigkeitswählhebel 38 betätigen kann.

Der Maschinenführer kann aber auch den Führungshandgriff 44 loslassen und mit einer Hand an dem Geschwindigkeitswählhebel 38 angreifen. Diesen Hebel und damit das Stellglied 36 kann er gegen die Wirkung der Federn des Federkraftspeichers 50 verstellen.

Patentansprüche

1.  Sicherheitseinrichtung an selbstfahrenden Arbeitsgeräten für Mitgängerbetrieb, bei denen der Fahrantrieb hydrostatisch mittels einer von einer Kraftmaschine angetriebenen Verstellpumpe und wenigstens eines von der Verstellpumpe gespeisten Hydraulikmotors erfolgt, enthaltend:

einen Signalgeber, der auf das Berühren eines Funktionsteils des Arbeitsgeräts durch den Maschinenführer anspricht und ein Berührungssignal liefert, und

einen Federkraftspeicher,

    der durch das Berührungssignal des Signalgebers in kraftspeichernder Stellung gehalten wird und

    durch dessen Federkraft die Verstellpumpe bei Wegfall des Berührungssignals auf Nullfördermenge verstellbar ist,

dadurch gekennzeichnet, daß

(a)  zum Bewegen des Federkraftspeichers (50) in die kraftspeichernde Stellung und zum Halten in dieser Stellung ein von einer Hilfsenergie gespeister Stellmotor vorgesehen ist und

(b)  die Zufuhr von Hilfsenergie zu dem Stellmotor von dem Signalgeber gesteuert ist.

2.  Sicherheitseinrichtung nach Anspruch 1, dadurch gekennzeichnet, daß

(a)  ein Stellglied (36) der Verstellpumpe (18), welches die Fördermenge der Verstellpumpe (18) bestimmt, mit einem Geschwindigkeitswählglied (38) in formschlüssiger Stellverbindung steht, und

(b)  der Federkraftspeicher (50) in seiner kraftspeichernden Stellung eine freie Einstellung des Stellgliedes (36) durch das Geschwindigkeitswählglied (38) zuläßt und bei seiner Bewegung aus der kraftspeichernden Stellung kraftschlüssig an dem Stellglied (36) angreift.

3.  Sicherheitseinrichtung nach Anspruch 2, dadurch gekennzeichnet, daß

(a)  der Stellmotor ein in einem Zylinder (54) zwischen einer kraftspeichernden ersten Stellung und einer zweiten Stellung beweglicher Stellkolben (56) ist, der den Zylinder (54) in eine erste und eine zweite Zylinderkammer (58 bzw. 60) unterteilt,

(b) eine Feder (61) des Federkraftspeichers (50) in der ersten Zylinderkammer (58) zwischen dem Stellkolben (56) und der Stirnwand (62) des Zylinders (54) angeordnet ist,

(c) die zweite Zylinderkammer (60) über ein Ventil (52) entweder mit einem Auslaß (64) oder mit einer Speisepumpe (20) verbunden ist, welche ein die Hilfsenergie lieferndes Druckmittel fördert,

(d) das Ventil (52) durch den Signalgeber gesteuert ist und

(e) der Stellmotor (56) bei seiner Bewegung aus der ersten in die zweite Stellung kraftschlüssig mit dem Stellglied (36) der Verstellpumpe (18) zum Rückstellen derselben auf Nullförderung kuppelbar ist.

4. Sicherheitseinrichtung nach Anspruch 3, dadurch gekennzeichnet, daß

(a) in einem an beiden Enden geschlossenen Zylinder (54) zwei Stellkolben (56, 66) geführt sind, wobei zwischen einem Ende des Zylinders (54) und dem dazu benachbarten ersten Stellkolben (56) die erste Zylinderkammer (58), zwischen den Stellkolben (56, 66) die zweite Zylinderkammer (60) und zwischen dem anderen Ende des Zylinders (54) und dem diesen benachbarten zweiten Stellkolben (66) eine dritte Zylinderkammer (68) gebildet ist,

(b) in der dritten Zylinderkammer (68) zwischen

15

der Stirnwand (70) des Zylinders (54) und dem zweiten Stellkolben (66) eine zweite Feder (72) angeordnet ist und

(c) in den Stirnwänden (62, 70) des Zylinders und den Stellkolben (56, 66) eine Schubstange (74) axial verschiebbar geführt ist, welche zwischen den Stellkolben (56, 66) einen Mitnehmer (76) aufweist und auf einer Seite aus dem Zylinder (54) herausgeführt und mit dem Stellkolben (36) der Verstellpumpe (18) gekoppelt ist.

5. Sicherheitseinrichtung nach Anspruch 4, dadurch gekennzeichnet, daß

(d) an der Innenwandung des Zylinders (54) Anschläge (80, 82) vorgesehen sind, welche die Einwärtsbewegung der Stellkolben (56, 66) begrenzen und

(e) der Mitnehmer (76) bei Anlage der Stellkolben (56, 66) an diesen Anschlägen (80, 82) formschlüssig zwischen den Stellkolben (56, 66) in einer Stellung gehalten wird, welche der Nullfördermenge entspricht.

6. Sicherheitseinrichtung nach einem der Ansprüche 3 bis 5, dadurch gekennzeichnet, daß

(a) das Ventil (52) ein als Magnetventil ausgebildetes 3/2-Wegeventil ist, welches die zweite Zylinderkammer (60) im erregten Zustand mit der Speisepumpe (20) und im nicht-erregten Zustand mit dem Auslaß (64) verbindet, und

(b)    die Erregerwicklung (84) des Ventils (52) in einem Stromkreis mit einem bei Berühren des Funktionsteils (44) geschlossenen Schalter (88) liegt.

7.    Sicherheitsschaltung nach Anspruch 6, dadurch gekennzeichnet, daß

(a)    das Funktionsteil (44) ein bügelförmiger Führungshandgriff mit zwei zueinander parallelen, als Griffteile dienenden Schenkeln (46, 48) ist,

(b)    in dem Führungshandgriff (44) ein U-förmiger Klinkenteil (90) angebracht ist, dessen Schenkel (92, 94) im Abstand innerhalb der beiden Schenkel (46, 48) des Führungshandgriffs (44) und parallel zu diesen verlaufen, dessen Mittelteil (96) mittels zweier paralleler Lenker (98, 100) an dem Führungshandgriff (44) angelenkt ist und der durch eine Feder (102) unter Zugbeanspruchung der Lenker (98, 100) gegen den Führungshandgriff (44) in einer zu den Schenkeln (92, 94) parallelen Richtung vorgespannt ist, und

(c)    der Schalter (88) mit einem Fühlerarm (104) an dem Mittelteil (96) des U-förmigen Klinkenteils (90) anliegt.

8.    Sicherheitsschaltung nach einem der Ansprüche 2 bis 7, dadurch gekennzeichnet, daß das Geschwindigkeitswählglied (38) ein Geschwindigkeitswählhebel ist, der über einen Bowdenzug (40) mit dem Stellglied (36) verbunden ist.

| Europäisches Patentamt | **EUROPÄISCHER RECHERCHENBERICHT** | Nummer der Anmeldung |
| --- | --- | --- |
| | | EP 80 10 4921 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl³) |
| --- | --- | --- | --- |
| | DE - B - 2 710 709 (LOSENHAUSEN) <br> * Spalte 1, Zeile 60 bis Spalte 2, Zeile 2; Spalte 3, Zeilen 26-33, 56-58; Figuren * <br><br>-- | 1 | F 15 B 20/00 <br> F 16 P 3/00 <br> E 01 C 19/26 |
| | DE - A - 2 759 197 (NIKOLAUS) <br> * Seite 10, Zeile 1 bis Seite 11, Zeile 19; Figur 1 * <br><br>-- | 1,3,4 | |
| | DE - A - 2 633 577 (HARA) <br> * Seite 5, Zeilen 6-22; Seite 5, Zeile 33 bis Seite 6, Zeile 2; Figuren * <br><br>-- | 1-3 | RECHERCHIERTE SACHGEBIETE (Int. Cl³) <br><br> F 16 P <br> E 01 C <br> B 60 K <br> F 16 H |
| A | DE - A - 2 646 527 (MEISSNER) | 1 | |
| A | FR - A - 2 348 319 (SOVEMAT) | 1 | |
| A | FR - A - 2 410 704 (AMMANN) <br><br>---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
| --- | --- | --- |
| Den Haag | 13-02-1981 | SEMBRITZKI |

EPA form 1503.1 06.78